# EUROPEAN PATENT APPLICATION

(11) **EP 2 953 278 A2**
(43) Date of publication of application: **09.12.2015**
(21) Application number: 13806796.2
(22) Date of filing: 22.08.2013
(51) Int. Cl.: H04B 10/40, H04B 10/071, H04B 10/67

(54) **OPTICAL TRANSCEIVING DEVICE AND METHOD**

(30) Priority: 22.02.2013 CN 201310057386
(71) Applicant: ZTE Corporation, Shenzhen, Guangdong 518057 (CN)
(72) Inventor: LI, Kun, Shenzhen Guangdong 518057 (CN); FU, Zhiming, Shenzhen Guangdong 518057 (CN); CHEN, Lei, Shenzhen Guangdong 518057 (CN); KUANG, Guohua, Shenzhen Guangdong 518057 (CN); BEI, Jinsong, Shenzhen Guangdong 518057 (CN); YU, Chendong, Shenzhen Guangdong 518057 (CN)
(74) Representative: Lemcke, Brommer & Partner Patentanwälte Partnerschaft mbB
(86) International application number: PCT/CN2013/082120
(87) International publication number: WO 2013/189423

(57) **Abstract**

Provided are an optical transceiving device and method. This device includes: an OTDR transmitter, an OTDR receiver, an input optical interface, an output optical interface, a housing, a splitter, and a sideband filter, and by means of a technical scheme of the present disclosure, this device has a function of sending and receiving OTDR detection optical signals, supports a function of wave multiplexing/de-multiplexing of detection optical signals and service optical signals, guarantees that transmission of the service optical signals and the detection optical signals on a main optical path do not influence each other, and may be taken as an important part of an optical module and be integrated into an optical transmission system device, enables an OTDR detection function to be set inside a system, and reduces an operation and maintenance cost of optical fibre failure detection.

## Description

### TECHNICAL FIELD

The present disclosure relates to the technical field of optical communication, and particularly relates to an optical transceiving device and method.

### BACKGROUND

With continuous development of an Internet service and various value-added services, an increasingly wider bandwidth of a network is also required, which promotes rapid development of an optical fibre network. Simultaneously, with popularization of the concept of energy conservation and environmental protection, it has already become a basic consensus that the optical fibre network is completely adopted for a core network, a bearer network and an access network.

After the popularization of the optical fibre network, an optical fibre taken as a transmission media can hardly avoid a link failure, so that transmission of optical signals is influenced and more and more accompanying optical fibre failure detection comes. In order to accurately locate a position of a failure, a dedicated Optical Time Domain Reflectometer (OTDR) is needed to be adopted to perform detection and locating. An original failure detection method in which the OTDR is externally set cannot adapt to an existing situation in which there are a plenty of optical fibre network failure detections because of the expensive OTDR, complex wiring, incompatibility with a transmission equipment, and etc., and results in the increase of an operation and maintenance cost of an operator.

In order to cope with this situation, simplifying the optical fibre failure detection step and reducing the operation and maintenance cost have become one of most urgent requirements of the operator currently. In view of this background environment, an OTDR technique and an optical transmission device are combined together, that is an optical module technique dedicated for OTDR optical path detection emerges. This technique will substitute an existing scheme in which the OTDR is set externally, and to the greatest extent maintain the measurement accuracy in an original technique and simultaneously avoid the relevant defect of the technique in which the OTDR is set externally, thereby reducing the cost, greatly simplifying equipment wiring. Because a detection function of the OTDR is integrated into an optical module, an original optical transmission equipment can then have an OTDR detection function only by adding a detachable optical module externally, which greatly reduces the cost in updating and upgrading the optical transmit equipment; simultaneously the optical module may also be singly used in an optical fibre network to be detected. In the optical module, an optical transceiving integrated component dedicated for OTDR optical path detection becomes a key technique therein.

### SUMMARY

Embodiments of the present disclosure provide an optical transceiving device and method, at least guaranteeing that transmission of service optical signals and test optical signals on a main optical path do not influence each other while sending and receiving Optical Time Domain Reflectometer (OTDR) detection optical signals.

An embodiment of the present disclosure provides an optical transceiver, which may include: an OTDR transmitter, an OTDR receiver, an input optical interface, an output optical interface, a housing, a splitter, and a sideband filter; wherein the OTDR transmitter is configured to convert external electrical signals into detection optical signals, and to transmit the detection optical signals to the sideband filter and to isolate light reflected from the sideband filter; the OTDR receiver is configured to convert reflected light output by the splitter into electrical signals; the input optical interface is connected to an optical fibre network to be detected, and is configured to perform normal transmission of service optical signals; the output optical interface is connected to the optical fibre network to be detected, and is configured to perform normal transmission of the service optical signals, transmit the received detection optical signals to the optical fibre network to be detected to perform OTDR detection, and transmit reflected optical signals and scattered optical signals generated by the OTDR detection to the splitter; the splitter is configured to perform bi-directional transmission on all the service optical signals, transmit the service optical signals subjected to the bi-directional transmission to the input optical interface or the output optical interface, perform reflection and transmission on the detection optical signals in a particular proportion, and transmit a transmitted part of the detection optical signals to the output optical interface, perform reflection and transmission on the scattered optical signals and the reflected optical signals in a particular proportion, and transmit reflected light to the OTDR receiver, and transmit a transmitted light to the sideband filter; the sideband filter is configured to perform bi-directional transmission on all the service optical signals, and transmit the service optical signals subjected to the bi-directional transmission to the input optical interface or the output optical interface; reflect all the detection optical signals emitted from the OTDR transmitter to the splitter, and transmit the transmitted light emitted from the splitter to the OTDR detector; and the housing is configured to perform external packaging on an optical path structure of the optical transceiver, and absorb a reflected part of the detection optical signals of the splitter.

Preferably, the OTDR transmitter may include an OTDR Transmitter Transistor Outline (TO), an isolator, and a first C-lens; the OTDR Transmitter TO is configured to convert the external electrical signals into the detection optical signals; the isolator is configured to make the detection optical signals emitted from the OTDR TransmitterTO transmitted in one way along an emitting direction, and to isolate light reflected from the sideband filter; and the first C-lens is configured to change the detection optical signals into collimated light and transmit the collimated light to the sideband filter.

Preferably, the OTDR receiver may include: an OTDR receiver TO, a band-pass filter, and a second C-lens; the second C-lens is configured to converge the reflected light output from the splitter; the band-pass filter is configured to transmit the detection optical signals in the reflected light to the OTDR receiver TO; and the OTDR receiver TO is configured to convert the detection optical signals output from the band-pass filter into the electrical signals.

Preferably, the input optical interface may include an input optical receptacle and a third C-lens; the input optical receptacle is configured to perform normal transmission of the service optical signals; and the third C-lens is configured to converge optical signals entering the input optical receptacle, and convert the optical signals emitted from the input optical receptacle into collimated light.

Preferably, the output optical interface may include an output optical receptacle, and a forth C-lens; wherein the input optical receptacle is configured to perform normal transmission of the service optical signals, transmit the received detection optical signals to the optical fibre network to be detected to perform detection, and transmit the reflected optical signals and the scattered optical signals generated by the OTDR detection to the splitter; and the forth C-lens is configured to converge optical signals entering the output optical receptacle, and convert the optical signals emitted from the output optical interface receptacle into collimated light.

Preferably, the splitter may be placed at a 45 degree angle with the OTDR transmitter, the OTDR receiver, the input optical interface, and the output optical interface; and the sideband filter may be placed at a 45 degree angle with the OTDR transmitter, the OTDR receiver, the input optical interface, and the output optical interface.

Preferably, the OTDR transmitter may further include a first metal support configured to support the isolator and the first C-lens.

Preferably, the OTDR receiver may further include a second metal support configured to support the band-pass filter and the second C-lens.

Preferably, the input optical interface may further include a third metal support configured to support the input interface receptacle.

Preferably, the output optical interface may further include a forth metal support configured to support the output optical interface.

An embodiment of the present disclosure further provides an optical transceiving method, applied to the above optical transceiver, which may include:
sending service optical signals of an optical fibre network to be detected to a splitter and a sideband filter through an output optical interface, and transmitting, by the splitter and the sideband filter, all the service optical signals to an input optical interface, and transmitting, by the input optical interface, the service optical signals to the optical fibre network to be detected; or sending service optical signals of an optical fibre network to be detected to a sideband filter and a splitter through an input optical interface, transmitting, by the sideband filter and the splitter, all the service optical signals to an output optical interface, and transmitting the service optical signals through the output optical interface to the optical fibre network to be detected;
converting, by an Optical Time Domain Reflectometer (OTDR) transmitter, external electrical signals into detection optical signals, and transmitting the detection optical signals to the sideband filter;
performing, by the sideband filter, total reflection on the detection optical signals;
transmitting the detection optical signals subjected to the total reflection to the splitter over an optical path of main channel service light;
performing, by the splitter, reflection and transmission on the detection optical signals in a particular proportion, transmitting a transmitted part of the detection optical signals through the output optical interface to the optical fibre network to be detected to perform detection, and transmitting a reflected part of the detection optical signals to a housing to absorb the reflected part of the detection optical signals;
sending reflected optical signals and scattered optical signals generated by OTDR detection to the splitter through the output optical interface;
performing, by the splitter, reflection and transmission on the scattered optical signals and the reflected optical signals in a particular proportion, transmitting a reflected light to the OTDR receiver, and transmitting transmitted light to the sideband filter;
converting, by the OTDR receiver, the reflected light output from the splitter into electrical signals;
reflecting, by the sideband filter, the transmitted light to the OTDR transmitter; and
isolating, by the OTDR transmitter, light reflected from the sideband filter.

The advantages of the embodiments of the present disclosure are as follows:
The optical components in the embodiments of the present disclosure have a function of sending and receiving OTDR detection optical signals, support a function of wave multiplexing/de-multiplexing of the detection optical signals and the service optical signals, guarantee that transmission of the service optical signals and the detection optical signals on a main optical path do not influence each other, and the optical components may be taken as important parts of an optical module and be integrated in an optical transmission system device, thus enabling an OTDR detection function to be set inside a system, and reducing an operation and maintenance cost of optical fibre failure detection.

### BRIEF DESCRIPTION OF THE DRAWINGS

Fig. 1 is a structure schematic diagram of an optical transceiver of an embodiment of the present disclosure;
Fig. 2 is a structure schematic diagram of Embodiment 1 of an optical transceiver dedicated for OTDR optical path detection of embodiments of the present disclosure;
Fig. 3 is a schematic diagram of a filter transmittance of an embodiment of the present disclosure;
Fig. 4 is a schematic diagram illustrating the working of an optical path of a system service light on a main light channel of an embodiment of the present disclosure;
Fig. 5 is a schematic diagram illustrating the working of an optical path for sending a detection light in Embodiment 1 of embodiments of the present disclosure;
Fig. 6 is a schematic diagram illustrating the working of an optical path for receiving the detection light of Embodiment 1 of embodiments of the present disclosure;
Fig. 7 is a structure schematic diagram of Embodiment 2 of an optical transceiver dedicated for OTDR optical path detection of embodiments of the present disclosure;
Fig. 8 is a schematic diagram illustrating the working of an optical path for sending detection light in Embodiment 2 of embodiments of the present disclosure; and
Fig. 9 is a flowchart of an optical transceiving method of an embodiment of the present disclosure.

### DETAILED DESCRIPTION

The exemplary embodiments of the present disclosure will be described below in more detail with reference to accompanied drawings. Although the exemplary embodiments of the present disclosure are shown in the accompanied drawings, it should be understood that the present disclosure may be implemented in various forms and should not be limited by the embodiments described here. On the contrary, these embodiments are provided to make the present disclosure to be understood more thoroughly, and to enable the scope of the present disclosure to be completely conveyed to those skilled in the art.

In order to be able to guarantee that transmission of service optical signals and test optical signals on a main optical path do not influence each other while sending and receiving OTDR detection optical signals, embodiments of the present disclosure provides an optical transceiving device and method, the device includes an OTDR transmitter, an OTDR receiver, an input optical interface, an output optical interface, a housing, and two 45 filters. The OTDR transmitter includes an OTDR transmitter TO, an isolator, a C-lens; an OTDR receiver includes an OTDR receiver TO, a band-pass filter, and a C-lens; an input optical interface includes a receptacle and a C-lens; an output optical interface includes a receptacle and a C-lens; a housing includes a metal part taken as a package shell; two 45 filters include a particular proportion-splitter used for the OTDR receiver and a sideband filter used for the OTDR transmitter.

The OTDR transmitter can convert external electrical signals into detection optical signals meeting an OTDR test system requirement, wherein a wavelength of the detection optical signal is 1625nm∼1675nm. The OTDR receiver can convert the reflected detection optical signals into electrical signals which can be detected by a system. The input optical interface and the output optical interface are used to connect with an optical fibre network to be detected, and to guarantee service optical signals of a system can be transmitted normally. The output optical interface is used to connect with an end of the optical fibre network to be detected, to enable the detection optical signals to enter the optical fibre network to be detected, and scattered optical signals and reflected optical signals generated in detection can be transmitted back to an optical component. The housing is used for external packaging of an optical path structure. The 45 filter includes a particular proportion-splitter of the OTDR receiver for performing light splitting on OTDR test optical signals in accordance with a particular transmission proportion and a particular reflection proportion, and simultaneously enabling all the service optical signals of a transmission system to pass; the sideband filter of the OTDR transmitter is used to reflect signals emitted from the OTDR transmitter, and enable all the service optical signals to pass. The present disclosure is further explained in detail below in combination with the accompanied drawings and the embodiments. It should be understood that the specific embodiment described here is only used to interpret the present disclosure, but is not used to limit the present disclosure.

### Device embodiment

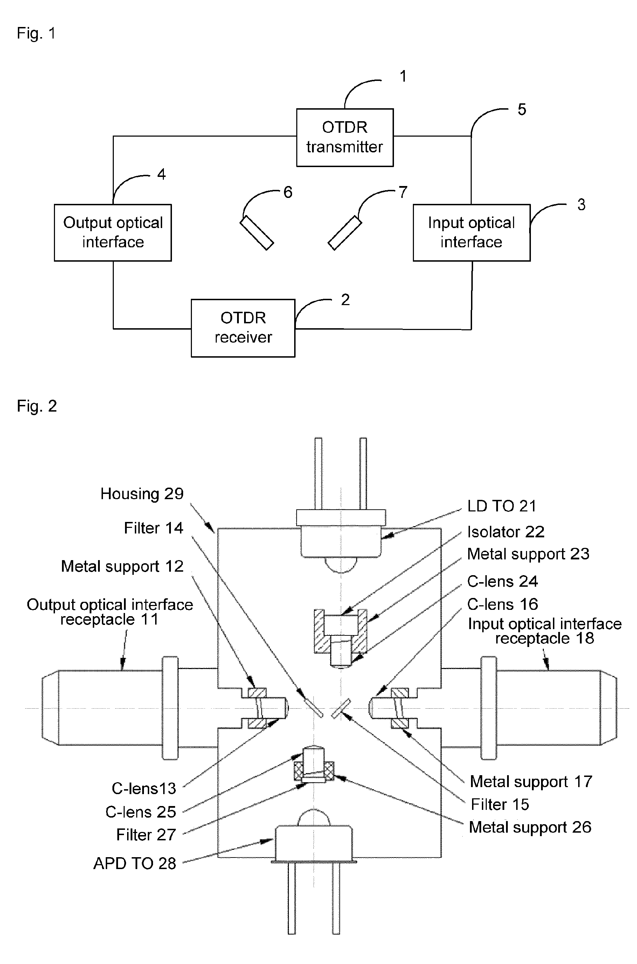

According to an embodiment of the present disclosure, an optical transceiver is provided, Fig. 1 is a structure schematic diagram of the optical transceiver of the embodiment of the present disclosure, and as shown in Fig. 1, the optical transceiver according to the embodiment of the present disclosure includes: an OTDR transmitter 1, an OTDR receiver 2, an input optical interface 3, an output optical interface 4, a housing 5, a splitter 6, and a sideband filter 7, and various modules of the embodiment of the present disclosure are explained in detail below.

Specifically, the OTDR transmitter 1 is configured to convert external electrical signals into detection optical signals and transmit the detection optical signals to the sideband filter 7, and isolate light reflected from the sideband filter 7;
the OTDR transmitter 1 specifically includes: an OTDR transmitter TO, an isolator, and a first C-lens;
the OTDR transmitter TO is configured to convert external electrical signals into detection optical signals;
the isolator is configured to make detection optical signals emitted from the OTDR transmitter TO transmitted in one way along an emitting direction, and isolate light reflected from the sideband filter 7; and
the first C-lens is configured to change the detection optical signals into collimated light and transmit the collimated light to the sideband filter 7.
The OTDR transmitter 1 further includes: a first metal support used to support the isolator and the first C-lens.

The OTDR receiver 2 is configured to convert reflected light output from the splitter 6 into electrical signals;
the OTDR receiver 2 specifically includes: an OTDR receiver TO, a band-pass filter, and a second C-lens;
the second C-lens is configured to converge the reflected light output from the splitter 6;
the band-pass filter is configured to transmit detection optical signals in the reflected light to the OTDR receiver TO; and
the OTDR receiver TO is configured to convert the detection optical signals output from the band-pass filter into electrical signals.

The OTDR receiver 2 further includes: a second metal support used to support the band-pass filter and the second C-lens.

The input optical interface 3 is connected to an optical fibre network to be detected, and is configured to perform normal transmission of the service optical signals;
the input optical interface 3 specifically includes: a receptacle of the input optical interface 3, and a third C-lens;
the receptacle of the input optical interface 3 is configured to perform normal transmission of the service optical signals;
the third C-lens is configured to converge optical signals entering the receptacle of the input optical interface 3, and convert the optical signals emitted from the receptacle of the input optical interface 3 into collimated light.

The input optical interface 3 further includes: a third metal support used to support the receptacle of the input interface 3.

The output optical interface 4 is connected to the optical fibre network to be detected, and is configured to perform normal transmission of the service optical signals, transmit the received detection optical signals to the optical fibre network to be detected to perform detection, and transmit scattered optical signals and reflected optical signals generated by the OTDR detection to the splitter 6;
the output optical interface 4 specifically includes: a receptacle of the output optical interface 4, and a forth C-lens;
the receptacle of the output optical interface 4 is configured to perform normal transmission of the service optical signals, transmit the received detection optical signals to the optical fibre network to be detected to perform detection, and transmit the scattered optical signals and the reflected optical signals generated by the OTDR detection to the splitter 6;
the forth C-lens is configured to converge the optical signals entering the receptacle of the output optical interface 4, and convert the optical signals emitted from the receptacle of the output optical interface 4 into collimated light.

The output optical interface 4 further includes: a forth metal support used to support the receptacle of the output optical interface 4.

The splitter 6 is configured to perform bi-directional transmission on all the service optical signals, transmit the service optical signals subjected to the bi-directional transmission to the input optical interface 3 or the output optical interface 4; perform reflection and transmission on the detection optical signals in a particular proportion, and transmit a transmitted part of the detection optical signals to the output optical interface 4; perform reflection and transmission on the scattered optical signals and the reflected optical signals in a particular proportion, and transmit reflected light to the OTDR receiver 2, and transmit transmitted light to the sideband filter 7;
the sideband filter 7 is configured to perform bi-directional transmission on all the service optical signals, and transmit the service optical signals subjected to the bi-directional transmission to the input optical interface 3 or the output optical interface 4; reflect all the detection optical signals emitted from the OTDR transmitter 1 to the splitter 6, and transmit the transmitted light emitted from the splitter 6 to the OTDR transmitter 1; and
it should be noted that the splitter 6 are placed at a 45 degree angle with the OTDR transmitter 1, the OTDR receiver 2, the input optical interface 3, and the output optical interface 4;
the sideband filter 7 is placed at a 45 degree angle with the OTDR transmitter 1, the OTDR receiver 2, the input optical interface 3, and the output optical interface 4.

The housing 5 is configured to perform external packaging on an optical path structure of the optical transceiver, and absorb the reflected part of the detection optical signals of the splitter 6.

In conclusion, by means of a technical scheme of the embodiment of the present disclosure, it may be guaranteed that service optical signals are normally transmitted, and the sending and receiving function of the OTDR is also available, and the OTDR detection can be performed on the optical fibre network to be detected.

The above technical scheme of the embodiment of the present disclosure may be illustrated below in combination with the accompanied drawings.

### Embodiment 1

Fig. 2 is a structure schematic diagram of Embodiment 1 of an optical transceiver dedicated for OTDR optical path detection of the embodiments of the present disclosure, and as shown in Fig. 2, this structure includes: an output optical interface side receptacle 11, a metal support 12, a C-lens 13, a filter 14, a filter 15, a C-lens 16, a metal support 17, an input optical interface side receptacle 18, an LD TO 21, an isolator 22, a metal support 23, a C-lens 24, a C-lens 25, a metal support 26, a filter 27, an APD TO 28, and a housing 29.

Here, the C-lens 13 is a fourth C-lens on the output optical interface side, the C-lens 16 is a third C-lens on the input optical interface side, the C-lens 24 is a first C-lens at the OTDR transmitter, the C-lens 25 is a second C-lens at the OTDR receiver; the metal support 12 is a fourth metal support used to support the output optical interface receptacle 11, the metal support 17 is a third metal support used to support input optical interface receptacle 18, the metal support 23 is a first metal support of the OTDR transmitter, and the metal support 26 is a second metal support of the OTDR receiver.

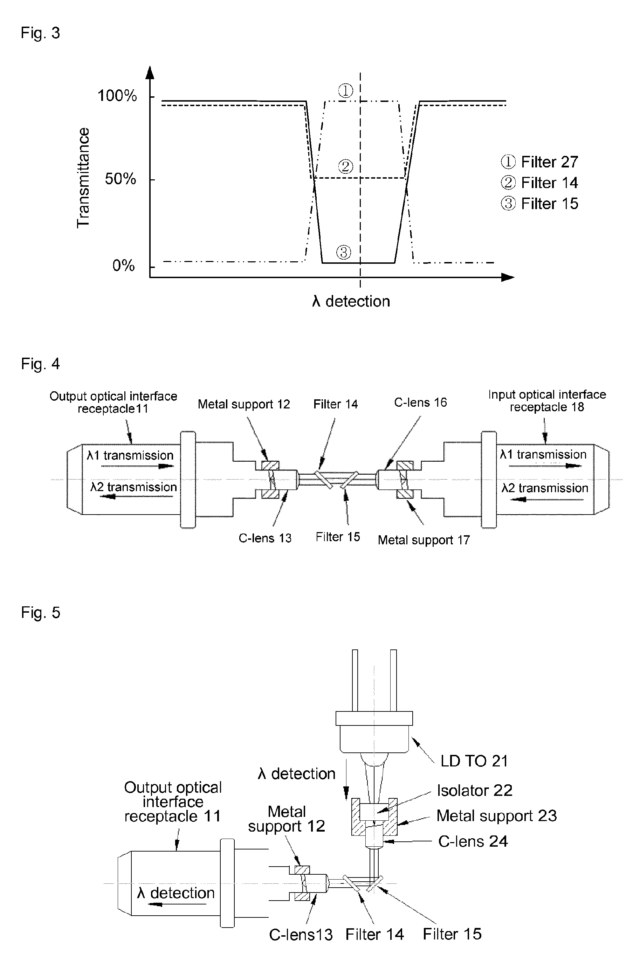

Fig. 3 is a schematic diagram of a filter transmittance of an embodiment of the present disclosure, and Fig. 3 shows a transparent feature of the filters 14, 15 and 17 adopted by the embodiment of the present disclosure. The filter 14 is a 45 splitter, and may transmit all service optical signals, and may perform reflection and transmission on the detection optical signals in a particular proportion. The filter 15 is a 45 band-pass filter, and may transmit all service optical signals, and then reflects all detection optical signals. The filter 27 is a 0 band-pass filter, may transmit all detection optical signals, and reflects the optical signals on the other waveband.

Fig. 4 is a schematic diagram illustrating the working of an optical path of system service light on a main light channel of an embodiment of the present disclosure, and as shown in Fig. 4, after transmission optical signals λ1 of the optical fibre network to be detected pass the output optical interface receptacle 11, the optical signals λ1 are coupled into the C-lens 13, then are changed into collimated light and sent to the filter 14. The filters 14 and 15 can transmit all service transmission optical signals λ1, the optical signals λ1 are transmitted to the C-lens 16 along the optical path and then converged on the input optical interface side receptacle 18, and then transmitted to another end of a node to be detected of the optical fibre network. A principle of transmission of optical signals λ2 which is reversely transmitted in the optical fibre network is the same as that of the optical signals λ1, and only the direction is contrary. The bi-directionally transmitted service optical signals may be transmitted in a component at a very low insertion loss cost.

Fig. 5 is a schematic diagram illustrating the working of an optical path for sending the detection light of Embodiment 1 of the embodiments of the present disclosure, and as shown in Fig. 5, the optical signals for performing the OTDR detection are emitted from an LD TO 21, and enter the C-lens 24 after passing an isolator 22, and a converged light beam is transformed into collimated light and ejected to the filter 15. The 45 filter 15 performs total reflection on a detection light waveband, therefore, after reflection, the light beam is transmitted on an optical path of main channel service light. After the light beam is transmitted to the filter 14, beam splitting is performed for reflection and transmission in accordance with a particular proportion, the transmitted light is coupled to the output optical interface receptacle 11 after entering the C-lens 13, and is then transmitted to the optical fibre network to be detected to perform detection.

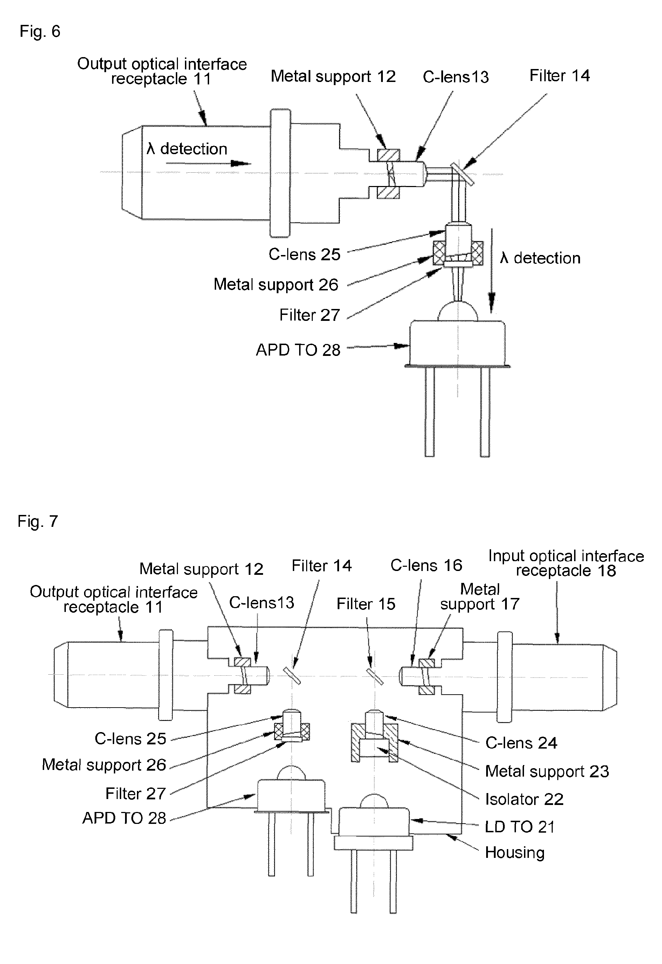

Fig. 6 is a schematic diagram illustrating the working of an optical path for receiving the detection light of Embodiment 1 of the embodiments of the present disclosure, and as shown in Fig. 6, the scattered optical signals and the reflected optical signals generated by the OTDR detection are transmitted by the output optical interface receptacle 11 to the C-lens 13, then converted into collimated light and then ejected to the filter 14. After the filter 14 performs beam splitting for reflection and transmission in accordance with a particular proportion, the reflected optical signals enter the C-lens 25, and then are converged at an APD To 28 after passing the filter 27 to convert the optical signals into the electrical signals.

### Embodiment 2

Fig. 7 is a structure schematic diagram of Embodiment 2 of the optical transceiver dedicated for the OTDR optical path detection of the embodiments of the present disclosure, and as shown in Fig. 7, this structure includes: an output optical interface receptacle 11, a metal support 12, a C-lens 13, a filter 14, a filter 15, a C-lens 16, a metal support 17, an input optical interface receptacle 18, an LD TO 21, an isolator 22, a metal support 23, a C-lens 24, a C-lens 25, a metal support 26, a filter 27, an APD TO 28, and a housing 29.

Here, the C-lens 13 is a fourth C-lens on the output optical interface side, the C-lens 16 is a third C-lens on the input optical interface side, the C-lens 24 is a first C-lens at the OTDR transmitter, the C-lens 25 is a second C-lens at the OTDR receiver; the metal support 12 is a fourth metal support used to support the output optical interface receptacle 11, the metal support 17 is a third metal support used to support input optical interface receptacle 18, the metal support 23 is a first metal support of the OTDR transmitter, and the metal support 26 is a second metal support of the OTDR receiver.

Fig. 3 is a schematic diagram of a filter transmittance of an embodiment of the present disclosure, and Fig. 3 shows a transparent feature of the filters 14, 15 and 17 adopted by the embodiment of the present disclosure. The filter 14 is a 45 splitter, and may transmit all service optical signals, and may perform reflection and transmission on the detection optical signals in a particular proportion. The filter 15 is a 45 band-pass filter, and may transmit all service optical signals, and then reflects all detection optical signals. The filter 27 is a 0 band-pass filter, may transmit all detection optical signals, and reflects the optical signals on the other waveband.

Fig. 4 is a schematic diagram illustrating the working of an optical path of system service light on a main light channel of an embodiment of the present disclosure, and as shown in Fig. 4, after transmission optical signals λ1 of the optical fibre network to be detected pass the output optical interface receptacle 11, the optical signals λ1 are coupled into the C-lens 13, then are changed into collimated light and sent to the filter 14. The filters 14 and 15 can transmit all service transmission optical signals λ1, the optical signals λ1 are transmitted to the C-lens 16 along the optical path and then converged on the input optical interface side receptacle 18, and then transmitted to another end of a node to be detected of the optical fibre network. A principle of transmission of optical signals λ2 which is reversely transmitted in the optical fibre network is the same as that of the optical signals λ1, and only the direction is contrary. The bi-directionally transmitted service optical signals may be transmitted in a component at a very low insertion loss cost.

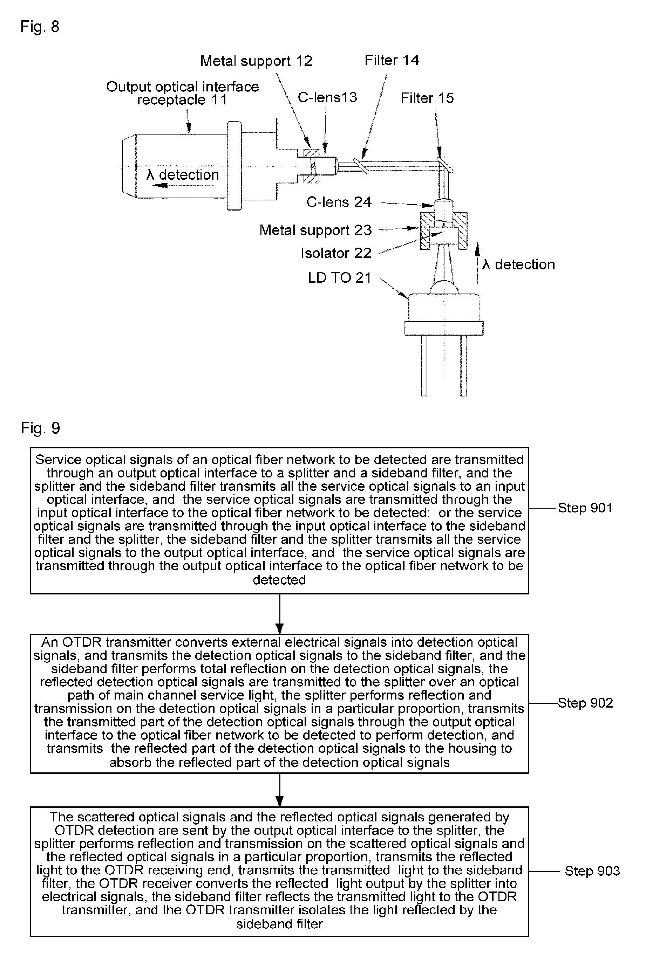

Fig. 8 is a schematic diagram illustrating the working of an optical path for sending the detection light of Embodiment 2 of the embodiments of the present disclosure, and as shown in Fig. 8, the optical signals for performing the OTDR detection are emitted from an LD TO 21, and enter the C-lens 24 after passing an isolator 22, and a converged light beam is transformed into collimated light and ejected to the filter 15. The 45 filter 15 performs total reflection on a detection light waveband, therefore, after reflection, the light beam is transmitted on an optical path of a main channel service light. After the light beam is transmitted to the filter 14, beam splitting is performed for reflection and transmission in accordance with a particular proportion, the transmitted light is coupled to the output optical interface receptacle 11 after entering the C-lens 13, and is transmitted to the optical fibre network to be detected to perform detection.

As shown in Fig. 6, the scattered optical signals and the reflected optical signals generated by the OTDR detection are transmitted by the output optical interface receptacle 11 to the C-lens 13, then converted into collimated light and then ejected to the filter 14. After the filter 14 performs beam splitting in accordance with a particular proportion, the reflected optical signals enter the C-lens 25, and then are converged at an APD To 28 after passing the filter 27 to convert the optical signals into the electrical signals.

In the embodiments of the present disclosure, the filter 14 is adopted for connection between an OTDR detection optical path and a main optical path, and during a process of guaranteeing normal transmission of the service light, the beam splitting is performed on the detection optical signals, guaranteeing normal sending and receiving work in the OTDR detection, and a particular beam splitting proportion is adopted, making a light transmission efficiency for a system to perform the OTDR detection to reach to a maximum.

In addition, a filter 27 is placed before an APD TO 28 of an OTDR receiver part of the embodiment of the present disclosure, so that only the detection optical signals can pass this filter, which guarantees that the detection signals are not influenced by other optical signals. An isolator 22 is placed before an LD TO 21 of a sending part, so that the optical signals can only be transmitted in one way along an LD emitting direction, and the scattered light and the reflected light generated by the OTDR detection are restrained from being transmitted to a sending optical path, thereby preventing the influence from the scattered light and the reflected light on a laser sending device.

### Method embodiment

According to an embodiment of the present disclosure, an optical transceiving method is provided and is applied to the optical transceiver in the above device embodiment. Fig. 9 is a flowchart of the optical transceiving method of the embodiment of the present disclosure, as shown in Fig. 9, the optical transceiving method according to the embodiment of the present disclosure includes the following processing:
step 901, service optical signals of an optical fiber network to be detected are transmitted through an output optical interface to a splitter and a sideband filter, and the splitter and the sideband filter transmits all the service optical signals to an input optical interface, and the service optical signals are transmitted through the input optical interface to the optical fiber network to be detected; or the service optical signals are transmitted through the input optical interface to the sideband filter and the splitter, the sideband filter and the splitter transmits all the service optical signals to the output optical interface, and the service optical signals are transmitted through the output optical interface to the optical fiber network to be detected;
step 902, an OTDR transmitter converts external electrical signals into detection optical signals, and transmits the detection optical signals to the sideband filter, and the sideband filter performs total reflection on the detection optical signals, transmits the reflected detection optical signals to the splitter on an optical path of a main channel service light, the splitter performs reflection and transmission on the detection optical signals in a particular proportion, transmits the transmitted part of the detection optical signals through the output optical interface to the optical fibre network to be detected to perform detection, and transmits the reflected part of the detection optical signals to the housing to absorb the reflected part of the detection optical signals; and
step 903, the scattered optical signals and the reflected optical signals generated by OTDR detection are transmitted through the output optical interface to the splitter, the splitter performs reflection and transmission on the scattered optical signals and the reflected optical signals in a particular proportion, transmits the reflected light to the OTDR receiver, transmits the transmitted light to the sideband filter, the OTDR receiver converts the reflected light output by the splitter into electrical signals, the sideband filter reflects the transmitted light to the OTDR transmitter, and the OTDR transmitter isolates the light reflected by the sideband filter.

The above technical scheme of the embodiments of the present disclosure is explained below in detail in combination with the accompanied drawing.

### Embodiment 1

Fig. 2 is a structure schematic diagram of Embodiment 1 of an optical transceiver dedicated for OTDR optical path detection of the embodiment of the present disclosure, and as shown in Fig. 2, this structure includes: an output optical interface side receptacle 11, a metal support 12, a C-lens 13, a filter 14, a filter 15, a C-lens 16, a metal support 17, an input optical interface side receptacle 18, an LD TO 21, an isolator 22, a metal support 23, a C-lens 24, a C-lens 25, a metal support 26, a filter 27, an APD TO 28, and a housing 29.

Here, the C-lens 13 is a fourth C-lens on the output optical interface side, the C-lens 16 is a third C-lens on the input optical interface side, the C-lens 24 is a first C-lens at the OTDR transmitter, the C-lens 25 is a second C-lens at the OTDR receiver; the metal support 12 is a fourth metal support used to support the output optical interface receptacle 11, the metal support 17 is a third metal support used to support input optical interface receptacle 18, the metal support 23 is a first metal support of the OTDR transmitter, and the metal support 26 is a second metal support of the OTDR receiver.

Fig. 3 is a schematic diagram of a filter transmittance of an embodiment of the present disclosure, and Fig. 3 shows a transparent feature of the filters 14, 15 and 17 adopted by the embodiment of the present disclosure. The filter 14 is a 45 splitter, and may transmit all service optical signals, and may perform reflection and transmission on the detection optical signals in a particular proportion. The filter 15 is a 45 band-pass filter, and may transmit all service optical signals, and then reflects all detection optical signals. The filter 27 is a 0 band-pass filter, may transmit all detection optical signals, and reflects the optical signals on the other waveband.

Fig. 4 is a schematic diagram illustrating the working of an optical path of system service light on a main light channel of an embodiment of the present disclosure, and as shown in Fig. 4, after transmission optical signals λ1 of the optical fibre network to be detected pass the output optical interface receptacle 11, the optical signals λ1 are coupled into the C-lens 13, then are changed into collimated light and sent to the filter 14. The filters 14 and 15 can transmit all service transmission optical signals λ1, the optical signals λ1 are transmitted to the C-lens 16 along the optical path and then converged on the input optical interface side receptacle 18, and then transmitted to another end of a node to be detected of the optical fibre network. A principle of transmission of optical signals λ2 which is reversely transmitted in the optical fibre network is the same as that of the optical signals λ1, and only the direction is contrary. The bi-directionally transmitted service optical signals may be transmitted in a component at a very low insertion loss cost.

Fig. 8 is a schematic diagram illustrating the working of an optical path for sending the detection light of Embodiment 2 of the embodiments of the present disclosure, and as shown in Fig. 8, the optical signals for performing the OTDR detection are emitted from an LD TO 21, and enter the C-lens 24 after passing an isolator 22, and a converged light beam is transformed into collimated light and ejected to the filter 15. The 45 filter 15 performs total reflection on a detection light waveband, therefore, after reflection, the light beam is transmitted on an optical path of a main channel service light. After the light beam is transmitted to the filter 14, beam splitting is performed for reflection and transmission in accordance with a particular proportion, the transmitted light is coupled to the output optical interface receptacle 11 after entering the C-lens 13, and is transmitted to the optical fibre network to be detected to perform detection.

As shown in Fig. 6, the scattered optical signals and the reflected optical signals generated by the OTDR detection are transmitted by the output optical interface receptacle 11 to the C-lens 13, then converted into collimated light and then ejected to the filter 14. After the filter 14 performs beam splitting in accordance with a particular proportion, the reflected optical signals enter the C-lens 25, and then are converged at an APD To 28 after passing the filter 27 to convert the optical signals into the electrical signals.

### Embodiment 2

Fig. 7 is a structure schematic diagram of Embodiment 2 of the optical transceiver dedicated for the OTDR optical path detection of the embodiments of the present disclosure, and as shown in Fig. 7, this structure includes: an output optical interface receptacle 11, a metal support 12, a C-lens 13, a filter 14, a filter 15, a C-lens 16, a metal support 17, an input optical interface receptacle 18, an LD TO 21, an isolator 22, a metal support 23, a C-lens 24, a C-lens 25, a metal support 26, a filter 27, an APD TO 28, and a housing 29.

Here, the C-lens 13 is a fourth C-lens on the output optical interface side, the C-lens 16 is a third C-lens on the input optical interface side, the C-lens 24 is a first C-lens at the OTDR transmitter, the C-lens 25 is a second C-lens at the OTDR receiver; the metal support 12 is a fourth metal support used to support the output optical interface receptacle 11, the metal support 17 is a third metal support used to support input optical interface receptacle 18, the metal support 23 is a first metal support of the OTDR transmitter, and the metal support 26 is a second metal support of the OTDR receiver.

Fig. 3 is a schematic diagram of a filter transmittance of an embodiment of the present disclosure, and Fig. 3 shows a transparent feature of the filters 14, 15 and 17 adopted by the embodiment of the present disclosure. The filter 14 is a 45 splitter, and may transmit all service optical signals, and may perform reflection and transmission on the detection optical signals in a particular proportion. The filter 15 is a 45 band-pass filter, and may transmit all service optical signals, and then reflects all detection optical signals. The filter 27 is a 0 band-pass filter, may transmit all detection optical signals, and reflects the optical signals on the other waveband.

Fig. 4 is a schematic diagram illustrating the working of an optical path of system service light on a main light channel of an embodiment of the present disclosure, and as shown in Fig. 4, after transmission optical signals λ1 of the optical fibre network to be detected pass the output optical interface receptacle 11, the optical signals λ1 are coupled into the C-lens 13, then are changed into collimated light and sent to the filter 14. The filters 14 and 15 can transmit all service transmission optical signals λ1, the optical signals λ1 are transmitted to the C-lens 16 along the optical path and then converged on the input optical interface side receptacle 18, and then transmitted to another end of a node to be detected of the optical fibre network. A principle of transmission of optical signals λ2 which is reversely transmitted in the optical fibre network is the same as that of the optical signals λ1, and only the direction is contrary. The bi-directionally transmitted service optical signals may be transmitted in a component at a very low insertion loss cost.

Fig. 8 is a schematic diagram illustrating the working of an optical path for sending the detection light of Embodiment 2 of the embodiments of the present disclosure, and as shown in Fig. 8, the optical signals for performing the OTDR detection are emitted from an LD TO 21, and enter the C-lens 24 after passing an isolator 22, and a converged light beam is transformed into collimated light and ejected to the filter 15. The 45 filter 15 performs total reflection on a detection light waveband, therefore, after reflection, the light beam is transmitted on an optical path of a main channel service light. After the light beam is transmitted to the filter 14, beam splitting is performed for reflection and transmission in accordance with a particular proportion, the transmitted light is coupled to the output optical interface receptacle 11 after entering the C-lens 13, and is transmitted to the optical fibre network to be detected to perform detection.

As shown in Fig. 6, the scattered optical signals and the reflected optical signals generated by the OTDR detection are transmitted by the output optical interface receptacle 11 to the C-lens 13, then converted into collimated light and then ejected to the filter 14. After the filter 14 performs beam splitting in accordance with a particular proportion, the reflected optical signals enter the C-lens 25, and then are converged at an APD To 28 after passing the filter 27 to convert the optical signals into the electrical signals.

In conclusion, by means of the technical scheme of the embodiments of the present disclosure, the function of wave multiplexing/de-multiplexing of detection optical signals and service optical signals can be supported, guaranteeing that transmission of the service optical signals and the detection optical signals on a main optical path do not influence each other. the optical components may be taken as important parts of an optical module and integrated in an optical transmission system device, so that an OTDR detection function may be set inside a system and an operation and maintenance cost of optical fibre failure detection may be reduced.

The algorithm and display provided here are not inherently related to any particular computer, virtual system or other devices. Various universal systems may also be used together with teaching based on the disclosure. According to the above description, it is apparent to construct a structure required by this kind of system. In addition, the present disclosure does not aim at any particular programming language. It shall be understood that the content of the present disclosure described here may be implemented using various programming language, and the above description of the particular language is intended to disclose an optimized implementation mode of the present disclosure.

In the specification provided here, a plenty of specific details are explained. However, it can be understood that the embodiments of the present disclosure can be practiced without these specific details. In certain examples, a well-known method, structure, and technique are not shown in detail, so as not to obscure understanding of this specification.

Similarly, it shall be understood, in order to simplify the present disclosure and help understand one or more of various aspects of the present disclosure, in the above description of the exemplary embodiments of the present disclosure, various features of the present disclosure sometimes are together grouped in a single embodiment, drawing, or description thereof. However, this disclosed method shall not be interpreted as reflecting the following intention: that is, the claimed disclosure requires more features than the features clearly recorded in each claim. More exactly, as that reflected by the claims below, an aspect of the present disclosure lies in that it is less than all features of a single embodiment disclosed above. Therefore, a claim pursuant to a specific embodiment is thereby clearly combined into this specific embodiment, wherein each claim itself is taken as a single embodiment of the present disclosure.

Those skilled in this art can understand that a module in a device of the embodiments may be adaptively changed and set in one or more devices which are different from the one in this embodiment. A module or a unit or a component in the embodiment may be combined into one module or unit or component, and in addition, they may be divided into multiple sub-modules or sub-units or sub-components. Except that at least some of such features and/or processes or units are mutually exclusive, any combination may be adopted to combine all features disclosed in the specification (including accompanied claims, abstract and drawings) and all processes or units of any method or equipment thus disclosed. Unless otherwise clearly stated, each feature disclosed in the specification (including accompanied claims, abstract and drawings) may be substituted with a substitution feature providing an identical, equivalent or similar purpose.

In addition, those skilled in the art can understand that although some embodiments described here includes certain features in other embodiment but not other features, the combination of features of different embodiments means to be within the scope of the present disclosure and forms different embodiments. For example, in the claims below, any embodiment to be protected may be used in any combination way.

Various parts of the present disclosure may be implemented by hardware, or be implemented by a software module operated on one or more processors, or be implemented by combining them. Those skilled in the art shall understand that in practice a micro-processor or a Digital Signal Processor (DSP) may be used to implement some or all functions of some or all parts in the optical transceiver according to the embodiments of the present disclosure. The present disclosure may also be implemented as equipment or a device program (for example, a computer program and a computer program product) used to execute a part or all of the method described here. In this way, a program implementing the present disclosure may be stored in a compute readable media, or may be in a form of one or more signals. Such signals may be downloaded from an Internet website, or may be provided on a carrier signals, or may be provided in any other form.

It shall be noted that the above embodiment explains the present disclosure but not limits the present disclosure, and those skilled in the art may design a substitute embodiment without departing from the scope of the accompanied claims. In the claims, any reference symbol between brackets shall not be constructed as limitation of the claims. The word "include" does not exclude existence of an element or step which is not listed in the claims. The word "a/an" or "one" before the element does not exclude existence of multiple such elements. The present disclosure may be implemented by means of hardware including several different elements and by means of a properly programmed computer. In the unit claim listing several devices, some of these devices may be specifically embodied through the same hardware item. The use of wording first, second, third, and etc. does not represent any sequence. These words may be interpreted as a name.

## Claims

1. An optical transceiver, comprising an Optical Time Domain Reflectometer (OTDR) transmitter, an OTDR receiver, an input optical interface, an output optical interface, a housing, a splitter, and a sideband filter; wherein
the OTDR transmitter is configured to convert external electrical signals into detection optical signals, transmit the detection optical signals to the sideband filter and isolate light reflected from the sideband filter;
the OTDR receiver is configured to convert reflected light output by the splitter into electrical signals;
the input optical interface is connected to an optical fibre network to be detected, and is configured to perform normal transmission of service optical signals;
the output optical interface is connected to the optical fibre network to be detected, and is configured to perform normal transmission of the service optical signals, transmit the received detection optical signals to the optical fibre network to be detected to perform OTDR detection, and transmit reflected optical signals and scattered optical signals generated by the OTDR detection to the splitter;
the splitter is configured to perform bi-directional transmission on all the service optical signals, transmit the service optical signals subjected to the bi-directional transmission to the input optical interface or the output optical interface; perform reflection and transmission on the detection optical signals in a particular proportion, and transmit a transmitted part of the detection optical signals to the output optical interface; and perform reflection and transmission on the scattered optical signals and the reflected optical signals in a particular proportion, and transmit reflected light to the OTDR receiver, and transmit transmitted light to the sideband filter;
the sideband filter is configured to perform bi-directional transmission on all the service optical signals, and transmit the service optical signals subjected to the bi-directional transmission to the input optical interface or the output optical interface; to reflect all the detection optical signals emitted from the OTDR transmitter to the splitter, and transmit the transmitted light emitted from the splitter to the OTDR transmitter; and
the housing is configured to perform external packaging on an optical path structure of the optical transceiver, and absorb a reflected part of the detection optical signals of the splitter.

2. The device according to claim 1, wherein the OTDR transmitter comprises an OTDR transmitter Transistor Outline (TO), an isolator, and a first C-lens; wherein
the OTDR transmitter TO is configured to convert the external electrical signals into the detection optical signals;
the isolator is configured to make the detection optical signals emitted from the OTDR transmitter TO transmitted in one way along an emitting direction, and isolate light reflected from the sideband filter; and
the first C-lens is configured to change the detection optical signals into collimated light and transmit the collimated light to the sideband filter.

3. The device according to claim 1, wherein the OTDR receiver comprises an OTDR receiver TO, a band-pass filter, and a second C-lens;
the second C-lens is configured to converge the reflected light output from the splitter;
the band-pass filter is configured to transmit detection optical signals in the reflected light to the OTDR receiver TO; and
the OTDR receiver TO is configured to convert the detection optical signals output from the band-pass filter into the electrical signals.

4. The device according to claim 1, wherein the input optical interface comprises: an input optical interface receptacle, and a third C-lens; wherein
the input optical interface receptacle is configured to perform normal transmission of the service optical signals; and
the third C-lens is configured to converge optical signals entering the input optical interface receptacle, and convert optical signals emitted from the input optical interface receptacle into collimated light.

5. The device according to claim 1, wherein the output optical interface comprises: an output optical interface receptacle, and a forth C-lens; wherein
the output optical interface receptacle is configured to perform normal transmission of the service optical signals, transmit the received detection optical signals to the optical fibre network to be detected to perform detection, and transmit the reflected optical signals and the scattered optical signals generated by the OTDR detection to the splitter; and
the forth C-lens is configured to converge optical signals entering the output optical interface receptacle, and convert optical signals emitted from the output optical interface receptacle into collimated light.

6. The device according to claim 1, wherein
the splitter is placed at a 45 degree angle with the OTDR transmitter, the OTDR receiver, the input optical interface, and the output optical interface; and
the sideband filter is placed at a 45 degree angle with the OTDR transmitter, the OTDR receiver, the input optical interface, and the output optical interface.

7. The device according to claim 2, wherein the OTDR transmitter further comprises a first metal support configured to support the isolator and the first C-lens.

8. The device according to claim 3, wherein the OTDR receiver further comprises a second metal support configured to support the band-pass filter and the second C-lens.

9. The device according to claim 4, wherein the input optical interface further comprises a third metal support configured to support the input interface receptacle.

10. The device according to claim 5, wherein the output optical interface further comprises a forth metal support configured to support the output optical interface.

11. An optical transceiving method, applied to the optical transceiver according to any one of claims 1-10, comprising:
sending service optical signals of an optical fibre network to be detected to a splitter and a sideband filter through an output optical interface, and transmitting, by the splitter and the sideband filter, all the service optical signals to an input optical interface, and transmitting, by the input optical interface, the service optical signals to the optical fibre network to be detected; or sending service optical signals of an optical fibre network to be detected to a sideband filter and a splitter through an input optical interface, transmitting, by the sideband filter and the splitter, all the service optical signals to an output optical interface, and transmitting the service optical signals through the output optical interface to the optical fibre network to be detected;
converting, by an Optical Time Domain Reflectometer (OTDR) transmitter, external electrical signals into detection optical signals, and transmitting the detection optical signals to the sideband filter;
performing, by the sideband filter, total reflection on the detection optical signals;
transmitting the detection optical signals subjected to the total reflection to the splitter over an optical path of main channel service light;
performing, by the splitter, reflection and transmission on the detection optical signals in a particular proportion, transmitting a transmitted part of the detection optical signals through the output optical interface to the optical fibre network to be detected to perform detection, and transmitting a reflected part of the detection optical signals to a housing to absorb the reflected part of the detection optical signals;
sending reflected optical signals and scattered optical signals generated by OTDR detection to the splitter through the output optical interface;
performing, by the splitter, reflection and transmission on the scattered optical signals and the reflected optical signals in a particular proportion, transmitting a reflected light to the OTDR receiver, and transmitting transmitted light to the sideband filter;
converting, by the OTDR receiver, the reflected light output from the splitter into electrical signals;
reflecting, by the sideband filter, the transmitted light to the OTDR transmitter; and
isolating, by the OTDR transmitter, light reflected from the sideband filter.
